(19) Europäisches Patentamt
European Patent Office
Office européen des brevets

(11) Veröffentlichungsnummer: **0 223 021**
**A2**

(12) # EUROPÄISCHE PATENTANMELDUNG

(21) Anmeldenummer: **86113462.5**

(51) Int. Cl.⁴: **C08G 65/28**, C08J 3/02

(22) Anmeldetag: **01.10.86**

(30) Priorität: **07.10.85 DE 3535731**

(43) Veröffentlichungstag der Anmeldung:
**27.05.87 Patentblatt 87/22**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Höfer, Rainer, Dr.**
**Klever Strasse 31**
**D-4000 Düsseldorf 30(DE)**
Erfinder: **Meffert, Alfred, Dr.**
**Marie-Curie-Strasse 10**
**D-4019 Monheim(DE)**
Erfinder: **Piorr, Robert, Dr.**
**Kieselei 12**
**D-4030 Ratingen-Hösel(DE)**
Erfinder: **Wegemund, Bernd, Dr.**
**Händelweg 3**
**D-5657 Haan 1(DE)**
Erfinder: **Held, Uwe**
**Emil-Schniewind-Strasse 5**
**D-5620 Velbert 15(DE)**

(54) **Antischaummittel für Polymerdispersionen (II).**

(57) Beschrieben wird die Verwendung von Umsetzungsprodukten endständiger Epoxidverbindungen der allgemeinen Formel I

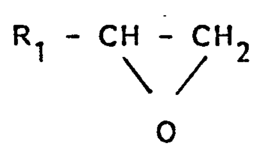

(I)

in der $R_1$ einen geradkettigen oder verzweigten Alkylrest mit 6 bis 22 C-Atomen bedeutet, mit Alkylenglykoletherverbindungen der allgemeinen Formel II

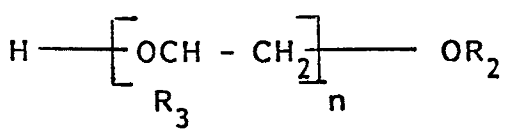

(II)

in der $R_2$ einen 1 bis 6 C-Atome aufweisenden Rest aus der Klasse geradkettiges oder verzweigtes Alkyl, Alkenyl, Cycloalkyl oder Aryl, $R_3$ Wasserstoff oder $CH_3$ und n eine Zahl von 1 bis 20 bedeuten, in wäßrigen Polymerdispersionen und Latices als emulgierender und/oder emulsionsstabilisierender, biologisch abbaubarer Bestandteil mit Schaumdämpfungsvermögen.

EP 0 223 021 A2

Xerox Copy Centre

# Antischaummittel für Polymerdispersionen (II)

Die Erfindung betrifft die Verwendung bestimmter endgruppenverschlossener Alkylpolyalkylenglykolether in wäßrigen Polymerdispersionen und Latices, um diesen bestimmte Eigenschaften zu verleihen, die in mehrfacher Hinsicht gewünscht und vorteilhaft sind.

Die US-PS 3 240 819 beschreibt unter anderem die Herstellung von Verbindungen der allgemeinen Formel

$$R - CHOH - CH_2 - \left[ OC_2H_4 \right]_x - Z$$

in der R einen Kohlenwasserstoffrest mit 6 -24 C-Atomen, x eine Zahl von 1 bis 100 und Z einen Alkoxyrest bedeuten. Die Herstellung solcher Verbindungen erfolgt durch Umsetzung endständiger Epoxide

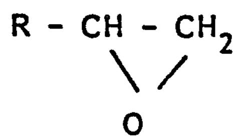

mit Hydroxylgruppen enthaltenden Polyglykolethern der Formel

$$H - \left[ OC_2H_4 \right]_x - Z$$

Die Umsetzung der Komponenten erfolgt üblicherweise in Gegenwart von basischen oder sauren Katalysatoren, die ihrerseits Einfluß auf den Ablauf der Öffnung des Epoxidringes haben.

In vereinfachter Darstellung erfolgt die Herstellung der genannten Verbindungen nach dem allgemeinen Schema

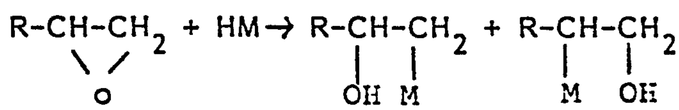

a b

Zum Teil läuft diese Umsetzung bereits ohne Katalysator ab, meist erfolgt jedoch eine saure oder basische Katalyse. Dabei steuert der pH-Wert den Mechanismus der Reaktion und beeinflußt das Verhältnis a zu b. Bei basischer Katalyse resultieren überwiegend Verbindungen der Struktur a, bei saurer Katalyse entsteht meist ein Gemisch der Species a und b, s.a. R.E. Parker, N.S. Isaacs, Chem. Rev. 59, 737 (1959).

Umsetzungsprodukte der zuvor genannten Art zeichnen sich nach den Angaben der US-PS 3 240 819 durch verbesserte oberflächenaktive Eigenschaften und insbesondere durch Detergenswirkung aus. Vergleichbare Angaben zur Herstellung vergleichbarer Verbindungen finden sich auch in der DE-OS 29 00 030.

Gegenüber diesem Stand der Technik, der sich mit Reinigungsmittelgemischen beschäftigt, geht die vorliegende Erfindung von der Aufgabe aus, bestimmte Verbesserungen in wäßrigen Polymerdispersionen bzw. Latices einzustellen. Wäßrige Polymerdispersionen und entsprechende Latices, die durch Emulsionspolymerisation gewonnen werden, haben bekanntlich in der Technik vielfaltige Einsatzzwecke, so finden sie beispielsweise als Bindemitteldispersionen Verwendung, die bei Transport, Lagerung und Verarbeitung den unterschiedlichsten Beanspruchungen ausgesetzt werden. Polymerdispersionen der geschilderten Art sind an sich hochsensible instabile 2-Phasen-Systeme, die unter den geschilderten Anwendungsbedingungen der Praxis zahlreichen destabilisierenden Einflüssen unterworfen sind. Ihre Stabilisierung - d.h. insbesondere die Verhinderung eines unerwünschten Aufrahmens oder Koagulierens -stellt für den Polymerfachmann einen komplexen Kreis von Problemen dar, zu dem die vielgestaltigsten Lösungsvorschläge

gemacht worden sind. Polymerdispersionen bzw. -emulsionen der geschilderten Art müssen beispielsweise gegen Koagulation durch Gefrier-und Auftaueinflüsse, Elektrolytzugaben oder die bei der Formulierung zu Dispersionsfarben, Beschichtungsmitteln, Dispersionsputzen, Lederzurichtungen, Polituren, Klebstoffen, Textilhilfsmitteln oder andere dem Fachmann bekannte Einsatzgebiete auftretenden Scher-und sonstige Kräfte geschützt werden. Für diese Stabilisierungsaufgaben werden meistens nichtionogene Tenside, wie Fettalkohol-, Fettsäure-, Alkylphenol-oder Fettaminpolyglykolether eingesetzt, die aber in der Regel die Schaumentwicklung im System fördern und vielfach biologisch auch nicht befriedigend abbaubar sind.

Allgemein gilt, daß gerade für die Anwendung bei der Emulsionspolymerisation laufend neue oberflächenaktive Mittel gesucht werden, welche günstige Eigenschaften aufweisen und zwar sowohl bei Herstellung der Emulsion als auch während der Polymerisation und insbesondere hinsichtlich der Eigenschaften des entstehenden Polymerlatex. Dies gilt umso mehr, als es dem Fachmann nicht möglich ist, aus dem chemischen Aufbau eines oberflächenaktiven Mittels auch auf seine Eigenschaften als Polymerisationsemulgator bzw. -stabilisator zuverlässige Rückschlüsse zu ziehen.

Gegenstand der Erfindung ist dementsprechend in einer ersten Ausführungsform die Verwendung von Umsetzungsprodukten endständiger Epoxidverbindungen der allgemeinen Formel I

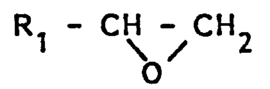 (I)

in der $R_1$ einen geradkettigen oder verzweigten Alkylrest mit 6 bis 22 C-Atomen bedeutet, mit Alkylenglykoletherverbindungen der allgemeinen Formel II

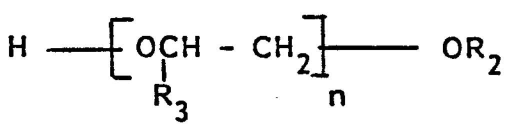 (II)

in der $R_2$ einen 1 bis 6 C-Atome aufweisenden Rest aus der Klasse geradkettiges oder verzweigtes Alkyl, Alkenyl, Cycloalkyl oder Aryl, $R_3$ Wasserstoff oder $CH_3$ und n eine Zahl von 1 bis 20 bedeuten, in wäßrigen Polymerdispersionen und Latices als emulgierender und/oder emulsionsstabilisierender, biologisch abbaubarer Bestandteil mit Schaumdämpfungsvermögen.

Erfindungsgemäß können diese Umsetzungsprodukte aus den Verbindungen der allgemeinen Formel I und II -im folgenden der Einfachheit halber als "Umsetzungsprodukte" bezeichnet -schon bei der Emulsionspolymerisation zugegen sein und hier als Emulgatoren oder Coemulgatoren gegebenenfalls in Kombination mit anderen Emulgatoren, beispielsweise anionischen Emulgatoren Verwendung finden. Ebenso ist es aber auch möglich, die Umsetzungsprodukte nachträglich fertigen Polymerdispersionen bzw. Latices als zusätzliches Stabilisierungsmittel zuzugeben. Verständlicherweise können diese Maßnahmen auch miteinander verbunden werden.

Zur Herstellung der erfindungsgemäß eingesetzten Umsetzungsprodukte wird auf die bereits zitierte Literatur verwiesen. Geeignete Epoxidverbindungen der allgemeinen Formal I zur Herstellung der Umsetzungsprodukte sind Epoxyalkane mit endständiger Epoxidgruppe und insgesamt 8 -24 C-Atomen. Die Epoxyalkane können einzeln oder im Gemisch eingesetzt werden. Eine bevorzugte Anzahl an C-Atomen liegt zwischen 8 und 18. Eingesetzt werden können lineare 1,2-Epoxyalkane oder verzweigte Produkte, insbesondere 2-alkylverzweigte Produkte. Weiterhin können einzelne oder gemischte 1,2-Epoxyalkane mit einer geraden Anzahl an C-Atomen eingesetzt werden oder solche, die sowohl aus geradzahligen wie auch ungeradzahligen 1,2-Epoxyalkanen bestehen.

Eine typische im Handel erhältliche Mischung aus unverzweigten 1,2-Epoxyalkanen hat die folgende Zusammensetzung:

C11 -C14 -Fraktion:
22 Gew.-% 1,2-Epoxyalkan C11
30 Gew.-% 1,2-Epoxyalkan C12
26 Gew.-% 1,2-Epoxyalkan C13 und
22 Gew.-% 1,2-Epoxyalkan C14.

C15 -C18 -Fraktion:
16 Gew.-% 1,2-Epoxyalkan C15
32 Gew.-% 1,2-Epoxyalkan C16
43 Gew.-% 1,2-Epoxyalkan C17 und
9 Gew.-% 1,2-Epoxyalkan C18.

Erfindungsgemäß verwendbare Emulgatoren sind weiterhin herstellbar, indem man von Gemischen unverzweigter und 2-alkylverzweigter Olefinoxide mit einem Anteil an innenständigen Olefinoxiden ausgeht.

Diese Ausgangsstoffe fallen bei der Ethylenoligomerisierung nach Ziegler an. Sie sind z.B. in Ullmanns Enzyklopädie der technischen Chemie, Band 7, Seite 210, Verlag Chemie, Weinheim 1974 beschrieben. So werden Produkte mit günstigen Eigenschaften erhalten, wenn man beispielsweise von einer C16/C18-Fraktion einer Epoxyalkanmischung ausgeht, welche nach der Kettenlänge folgende Bestandteile enthält:
2 Gew.-% C14-Epoxyalkane
50 Gew.-% C16-Epoxyalkane
38 Gew.-% C18-Epoxyalkane und
10 Gew.-% C20-Epoxyalkane.

Nach der Struktur geordnet enthält dieses Gemisch die folgende Zusammensetzung:
ca. 60 Gew.-% unverzweigte endständige Epoxyalkane
ca. 25 Gew.-% 2-alkylverzweigte, endständige Epoxyalkane und
ca. 17 Gew.-% innenständige Epoxyalkane.

Die zur Umsetzung mit den 1,2-Epoxyalkanen eingesetzten Verbindungen der allgemeinen Formel II sind erhältlich, indem ein Alkohol, vorzugsweise ein primärer Alkohol der allgemeinen Formel
$HOR_2$,
wobei $R_2$ die vorstehend genannte Bedeutung hat, mit n-mol Ethylenoxid und/oder Propylenoxid pro mol Alkohol in bekannter Weise umsetzt. So können beispielsweise Methanol, Ethanol, 1-Propanol, 2-Propanol, 1-Butanol, andere Butanolisomeren und/oder die Isomeren Pentanole oder Hexanole mit einem bis 20 mol Ethylenoxid und/oder Propylenoxid umgesetzt werden. Dabei führt die Veretherung mit Ethylenoxid zu Produkten, bei denen $R_3$ = Wasserstoff ist, während die Umsetzung mit Propylenoxid zu Produkten führt, bei denen $R_3$ = Methyl ist.

In einer besonders bevorzugten Ausführungsform der Erfindung werden Polyglykolether der Formel II eingesetzt, in der n eine Zahl von 8 bis 20 bedeutet. Besonders bevorzugt ist weiterhin die Verwendung von Verbindungen der Formel II, in der n = 8 -16 ist. Bevorzugt ist es weiterhin, daß wenigstens 50 % der Reste $R_3$, insbesondere 70 % dieser Reste $R_3$ Wasserstoff bedeuten, wobei in der besonders bevorzugten Ausführungsform alle Reste $R_3$ Wasserstoff sind.

In einer weiteren Ausgestaltung der Erfindung werden die erfindungsgemäßen Umsetzungsprodukte in Kombination mit Polyethylenglykolethern eingesetzt, wie sie in der DE-OS 33 15 952 beschrieben sind. Hierbei handelt es sich um Polyethylenglykoletherprodukte, die durch Anlagerung von 4 bis 20 Gew.-Teilen Ethylenoxid an 1 Gew.-Teil Polyglycerin mit einer Hydroxylzahl im Bereich von 900 bis 1200 und anschließende Veretherung der freien Hydroxylgruppen mit Alkylhalogeniden mit 4 bis 8 C-Atomen erhalten werden.

Polyglycerine der geschilderten Art fallen bei der großtechnischen Herstellung des Glycerins als Destillationsrückstände an. Es handelt sich dabei um Gemische aus höhermolekularen Kondensationsprodukten des Glycerins, bevorzugt aus solchen mit 2 bis 10 Glycerinresten im Molekül. Diese Polyglycerine sind durch ihre Hydroxylzahl charakterisiert, die in der Regel zwischen 900 und 1200 liegt. Entsprechende Polyglycerine können natürlich auch auf synthetischem Wege erhalten, beispielsweise durch längeres Erhitzen von Glycerin auf 220 bis 240°C in Gegenwart von Ätzalkali, vorzugsweise in Schutzgasatmosphäre und Abdestillieren des bei der Kondensation gebildeten Wassers.

Zur Herstellung der erfindungsgemäß gewünschtenfalls mitzuverwendenden Polyglycerinpolyglykolether setzt man zweckmäßigerweise die vorstehend beschriebenen Polyglycerine mit Ethylenoxid im Gewichtsverhältnis von 1 : 4 bis 1 : 20 um und verethert anschließend die im erhaltenen Reaktionsprodukt vorhandenen Hydroxylgruppen. Die Umsetzung mit Ethylenoxid wird unter den bekannten Alkoxylierungsbedingungen, vorzugsweise in Gegenwart von geeigneten alkalischen Katalysatoren durchgeführt. Die Veretherung der freien Hydroxylgruppen schließlich wird unter den bekannten Bedingungen der Williamsonschen Ethersynthese mit geradkettigen oder verzweigten $C_4$-$C_8$-Alkylhalogeniden durchgeführt. Die Veretherung der freien Hydroxylgruppen kann aber auch in Analogie zur DE-PS 868 147 durch Umsetzung mit Isoolefinen, beispielsweise Isobutylen in Gegenwart eines sauren Katalysators erfolgen.

Werden Gemische aus den Umsetzungsprodukten der Verbindungen der allgemeinen Formeln I und II mit den endgruppenverschlossenen Polyglycerinpolyglykolethern verwendet, so sind Gewichtsverhältnisse dieser Komponenten im Bereich von 1 : 1 bis 9 : 1 und insbesondere solche im Bereich von etwa 2,5 : 1 bis 9 : 1 bevorzugt, da sie sich durch starke schaumdrückende Wirkung auszeichnen. Auch diese Gemische erfüllen die gesetzlichen Anforderungen an die biologische Abbaubarkeit. Die erfindungsgemäß eingesetzten Polyglykolether bzw. Polyglykolethergemische zeichnen sich weiterhin durch Alkali-und Säurestabilität aus.

Im praktischen Einsatz enthalten die Polymerdispersionen bzw. Latices die erfindungsgemäßen Umsetzungsprodukte bzw. ihre Abmischungen mit den Polyglycerinethern üblicherweise in Mengen von etwa 0,05 bis 5 Gew.-%, bezogen auf die Trockenmasse der Dispersion. Mengen im Bereich von etwa 0,5 bis 3 Gew.-% können besonders bevorzugt sein.

**Beispiele**

Beispiel 1

Die erfindungsgemäß eingesetzten Umsetzungsprodukte wurden als entschäumende Zusätze an einer 50 Gew.-%igen Terpolymer-Dispersion vom Typ VAc/VeoVa/AS geprüft. Die 50-prozentige Polymerdispersion enthält 33,0 Gewichtsteile (GT) Vinylacetat, 14,4 GT Versaticsäure-Vinylester (VeoVa 10) und 4,8 GT Acrylsäure. Als Emulgator dient eine Mischung aus einem Laurylethersulfobernsteinsäurehalbester-Di-Na-Salz und dem Umsetzungsprodukt von Nonylphenol mit 30 mol Ethylenoxid (EO).

Die erfindungsgemäß beschriebenen Umsetzungsprodukte wurden im Vergleich zu einem handelsüblichen EO/PO-Blockcopolymer und dem Kondensationsprodukt von Nonylphenol + 10 EO nach der nachfolgend beschriebenen Prüfmethode getestet. Die beschriebenen Produkte wurden mit einer Zusatzmenge von 2 %, bezogen auf Trockenmasse Polymerdispersion, eingesetzt. Vergleichsweise wurde die Prüfung der Polymerdispersion ohne Zusätze als Standard (Nullversuch) durchgeführt.

Die Prüfmethode im einzelnen:

In Zeitabständen von 0,5, 1, 2, 3, 5, 10 und 20 min. wird das Gesamtvolumen abgelesen und die ermittelten Werte in ein Volumina/Zeit-Diagramm eingetragen. Die so erhaltenen Werte geben eine Aussage über die Schaumeigenschaften der Polymerdispersion.

Die beschriebene Methode kann zur Prüfung des Einflusses entschäumender Substanzen bzw. -schaumarmer Tenside auf deren Schaumeigenschaften angewandt werden. In diesem Fall wird von einer Polymerdispersion das Gesamtvolumen nach 10 min. Umlauf sowie der Schaumzerfall innerhalb der vorgegebenen Zeitintervalle ermittelt. Die gefundenen Werte stellen den Standard für die weiteren Prüfungen dar. Vergleichsweise wird ein Versuch mit der zu prüfenden Substanz durchgeführt. Die Dosierung der Prüfsubstanz zur Polymerdispersion erfolgt vor dem 10-minütigen Umlauf.

Untersucht wurden die folgenden Substanzen:

1. Ringöffnungsprodukt eines $C_{12}$-1,2-Epoxyalkans mit dem Umsetzungsprodukt aus Methanol und 10 mol Ethylenoxid,
2. analoges Ringöffnungsprodukt mit dem Umsetzungsprodukt von Ethanol mit 10 mol Ethylenoxid,
3. analoges Ringöffnungsprodukt zu 2 eines $C_{14}$-1,2-Epoxyalkans,
4. analoges Ringöffnungsprodukt zu 1 und 2 mit dem Umsetzungsprodukt von Butanol-1 mit 10 mol Ethylenoxid,
5. analoges Ringöffnungsprodukt wie 4, jedoch ausgehend von $C_{14}$-1,2-Epoxyalkan,

Vergleichsversuche:

6. ohne Entschäumer
7. mit dem Umsetzungsprodukt von Nonylphenol mit 10 mol Ethylenoxid als Nachstabilisierungsmittel
8. mit einem Ethylenoxid-Propylenoxid-Blockcopolymeren als Entschäumer.

Die gemessenen Schaumhöhen sind in der folgende Tabelle zusammengefaßt:

Tabelle I

| Entschäumer-Nr.: | 1 min | 2 min | 5 min | 10 min | 20 min |
|---|---|---|---|---|---|
| 1 | 1880 | 1700 | 800 | 480 | 420 |
| 2 | 1940 | 1800 | 1100 | 560 | 460 |
| 3 | 1980 | 1920 | 1500 | 800 | 500 |
| 4 | 1400 | 1240 | 520 | 440 | 380 |
| 5 | 1900 | 1660 | 700 | 420 | 360 |
| 6 | 1980 | 1900 | 1700 | 900 | 560 |
| 7 | 1980 | 1960 | 1800 | 1100 | 600 |
| 8 | 1960 | 1900 | 1500 | 600 | 400 |

Beispiel 2

In Tabelle II ist am Beispiel des erfindungsgemäßen Produktes 3 die schaumunterdrückende Wirkung in Abhängigkeit von der Einsatzkonzentration dargestellt.

## Tabelle II

Prüfung der schaumdrückenden Wirkung in Abhängigkeit von der Einsatzkonzentration

| Zeit in min | Schaumvolumen in ml | | |
|---|---|---|---|
| | Standard (Beispiel 1, 6., Tab. I) | Substanz 3 0,5 % Zusatz | 3 % Zusatz |
| 0' | 2.000 | 2.000 | 2.000 |
| 2' | 1.900 | 1.800 | 1.800 |
| 5' | 1.700 | 1.560 | 1.500 |
| 10' | 900 | 800 | 700 |

**Ansprüche**

1. Verwendung von Umsetzungsprodukten endständiger Epoxidverbindungen der allgemeinen Formel I

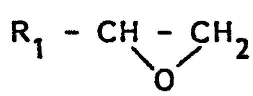 (I)

in der $R_1$ einen geradkettigen oder verzweigten Alkylrest mit 6 bis 22 C-Atomen bedeutet, mit Alkylenglykoletherverbindungen der allgemeinen Formel II

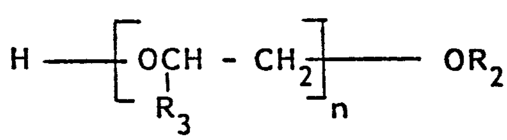 (II)

in der $R_2$ einen 1 bis 6 C-Atome aufweisenden Rest aus der Klasse geradkettiges oder verzweigtes Alkyl, Alkenyl, Cycloalkyl oder Aryl, $R_3$ Wasserstoff oder $CH_3$ und n eine Zahl von 1 bis 20 bedeuten, in wäßrigen Polymerdispersionen und Latices als emulgierender und/oder emulsionsstabilisierender, biologisch abbaubarer Bestandteil mit Schaumdämpfungsvermögen.

2. Ausführungsform nach Anspruch 1, dadurch gekennzeichnet, daß die Umsetzungsprodukte aus den Verbindungen der Formeln I und II

a) ganz oder teilweise schon bei der Emulsionspolymerisation zugegen sind und/oder

b) der fertigen Polymerdispersion zugegeben werden.

3. Ausführungsform nach Ansprüchen 1 und 2, dadurch gekennzeichnet, daß die Umsetzungsprodukte bei der Emulsionspolymerisation als nicht-ionogene Emulgatoren oder Co-Emulgatoren verwendet werden.

4. Ausführungsform nach Ansprüchen 1 bis 3, dadurch gekennzeichnet, daß in den Verbindungen der allgemeinen Formel I bzw. II derRest $R_1$ ein geradkettiger oder verzweigter Alkylrest mit 8 bis 18 C-Atomen und insbesondere mit 10 bis 16 C-Atomen ist und daß weiterhin bevorzugt wenigstens 50 % der Rest $R_3$, insbesondere wenigstens 70 % der Reste $R_3$ Wasserstoff bedeuten, wobei in der besonders bevorzugten Ausführungsform alle Reste $R_3$ Wasserstoff sind.

5. Ausführungsform nach Ansprüchen 1 bis 4, dadurch gekennzeichnet, daß die Umsetzungsprodukte aus den Verbindungen der allgemeinen Formeln I und II im Gemisch zusammen mit Polyethylenglykolethern verwendet werden, die durch Anlagerung von 4 bis 20 Gewichtsteilen Ethylenoxid an 1 Gewichtsteil Polyglycerin mit einer Hydroxylzahl von 900 bis 1200 und anschließende Veretherung der freien Hydroxylgruppen mit Alkylhalogeniden mit 4 bis 8 C-Atomen erhalten worden sind, wobei vorzugsweise Gewichtsverhältnisse der zuvor erwähnten Umsetzungsprodukte zu den Polyglycerinverbindungen im Bereich von etwa 1 : 1 bis 9 : 1 verwendet werden.

6. Ausführungsform nach Ansprüchen 1 bis 5, dadurch gekennzeichnet, daß die Umsetzungsprodukte in den Polymerdispersionen bzw. Latices in Mengen von 0,05 bis 5 Gew.-%, vorzugsweise in Mengen von 0,5 bis 3 Gew.-% -jeweils bezogen auf die Trockenmasse der Dispersion -vorliegen.